Europäisches Patentamt

European Patent Office

Office européen des brevets

(11) Numéro de publication: **0 078 195**
**B1**

(12) **FASCICULE DE BREVET EUROPEEN**

(45) Date de publication du fascicule du brevet: **29.01.86**

(21) Numéro de dépôt: **82401899.8**

(22) Date de dépôt: **15.10.82**

(51) Int. Cl.⁴: **H 04 B 14/06, H 04 N 7/13**

(54) **Procédé et système, de codage et décodage différentiel de données limitant la propagation des erreurs de transmission.**

(30) Priorité: **27.10.81 FR 8120167**

(43) Date de publication de la demande:
**04.05.83 Bulletin 83/18**

(45) Mention de la délivrance du brevet:
**29.01.86 Bulletin 86/05**

(84) Etats contractants désignés:
**BE DE GB LU NL**

(56) Documents cités:
**EP-A-0 012 632**

**IEEE TRANSACTIONS ON COMMUNICATIONS; vol. COM-26, no. 3, mars 1978, pages 362-368, New York (USA); M.C.W. VAN BUUL: "Hybrid D-PCM, a combination of PCM and DPCM"**

**CONFERENCE RECORD, 1978 International Conference on Communications, vol. 1, 4-7 juin 1978, pages 12B.3.1 - 12B.3.6, Toronto (CA); N.F. MAXEMCHUK et al.: "Performance of DPCM coders for picture signals in the presence of transmission errors"**

(73) Titulaire: **THOMSON-CSF**
**173, Boulevard Haussmann**
**F-75379 Paris Cedex 08 (FR)**

(72) Inventeur: **Catros, Jean-Yves**
**THOMSON-CSF SCPI 173, bld Haussmann**
**F-75379 Paris Cedex 08 (FR)**

(74) Mandataire: **Weinmiller, Jürgen et al**
**Zeppelinstrasse 63**
**D-8000 München 80 (DE)**

Courier Press, Leamington Spa, England.

## Description

L'invention concerne la transmission d'image, notamment de télévision, par des données à débit réduit par codage, et plus particulièrement un procédé, et un système, de codage et décodage différentiel, de données limitant la propagation des erreurs en cas de mauvaise transmission.

Le codage par modulation d'impulsions codées différentielles (MICD ou en anglais DPCM) des signaux de télévision destinés à être traités ou transmis sous forme numérique, pour obtenir une compression du débit de données à transmettre, est bien connu.

Ce codage consiste à coder la différence entre la valeur d'un échantillon du signal de télévision et une estimation, ou prédiction, de cette valeur calculée à partir d'échantillons précédents déjà codés. Les différences, dites erreurs de prédiction, sont classées en zones autour de 0, les zones étant délimitées par des valeurs de seuil. Toutes les valeurs de différence situées entre deux seuils, correspondant à un même niveau de quantification, sont codées suivant une combinaison codée $C_i$ constante correspondant à la zone de rang i délimitée par ces deux seuils. L'évolution de la largeur des zones en fonction de leur rang i à partir de 0 détermine ce qu'il est convenu d'appeler la caractéristique de compression, ou de quantification.

Le problème à résoudre avec ce type de codage est lié aux erreurs de transmission.

En effet, si aucune précaution particulière n'est prise, ces méthodes ont une grande sensibilité aux erreurs de transmission; une seule erreur de transmission peut fausser tous les échantillons décodés suivants.

Diverses méthodes ont été proposées pour résoudre ce problème.

La première consiste à utiliser, pour le codage proprement dit des niveaux quantifiés, des codes correcteurs d'erreurs qui ajoutent des bits de redondance aux bits d'information avant transmission. Cette méthode, après la réduction du débit d'informations à transmettre, réintroduit une augmentation de ce débit.

Une seconde méthode consiste à utiliser pour le calcul de la prédiction, une fonction de prédiction particulière, par exemple une intégration avec perte, qui évite que l'erreur se propage au delà d'une certaine distance.

Une troisième méthode consiste à analyser le signal reçu pour détecter un changement dans ses propriétés statistiques d0 à l'erreur; ce qui permet ensuite de corriger cette erreur.

Enfin, une autre méthode consiste à coder non pas seulement les différences ou erreurs de prédiction mais une fonction de l'erreur de prédiction et de la prédiction elle-même.

Les méthodes rappelées succinctement ci-dessus soit augmentent le débit pour la correction d'erreurs, soit ne permettent das d'obtenir une correction suffisante pour supprimer lors de la reconstruction des images leurs défauts dûs à la propagation des erreurs de transmission.

Le brevet français No. 2 408 945 ainsi que son addition No. 2 443 769 ont décrit une méthode de compression (codage) et expansion (décodage) de signaux numériques de télévision à codage différentiel dont la particularité consiste à choisir, au lieu d'une caractéristique de quantification symétrique par rapport à 0 comme dans les systèmes antérieurs, une caractéristiques de quantification non symétrique par rapport à 0 en ce qui concerne le nombre et les valeurs des seuils et des niveaux de quantification; le certificat d'addition décrit plus précisémment une méthode dans laquelle cette caractéristique de quantification varie suivant la valeur de la prédiction: la gamme de variation de la prédiction est découpée en zones de prédiction, et à chaque zone est associée une caractéristique de quantification, cette caractéristique variant d'une zone de prédiction à la suivante, et chaque caractéristique de quantification comportant le même nombre de valeurs de seuils et de niveaux de reconstruction, mais des niveaux extrêmes négatifs différents d'une zone de prédiction à une autre.

Cette méthode a conduit à une amélioration des images reconstruites à partir des échantillons transmis, car elle multiplie par 2 le nombre de niveaux de reconstruction possibles à nombre de bits transmis égal, mais cette méthode ne permet pas d'éviter la propagation des erreurs de transmission.

L'invention a pour objet un procédé de codage-décodage différentiel apparenté à celui décrit dans le certificat d'addition décrit ci-dessus par le fait que la gamme de variation de la prédiction est également découpée en zones. Mais, pour permettre un codage autocorrecteur, l'allocation des combinaisons codées en fonction des différences ou erreurs de prédiction à coder est liée à la caractéristique de quantification et variable d'une zone de prédiction à une autre zone, mais invariante pour toutes les valeurs de prédiction inclues dans une même zone de prédiction. La caractéristique de quantification quant à elle peut être symétrique ou non symétrique par rapport à zéro en ce qui concerne le nombre et les valeurs des seuils et des niveaux de reconstruction, ou les niveaux peuvent être équidistants. De même, la gamme de variation de la prédiction peut être découpée en zones égales ou différentes.

En effet, la limitation de la propagation des erreurs est obtenue par une allocation de code particulière, variable d'une zone de prédiction à une autre par rapport aux niveaux de reconstruction, mais reprise identique à elle-même entre les niveaux extrêmes négatif et positif correspondant aux différentes zones de prédiction successives.

Selon l'invention, un procédé de codage-décodage différentiel de données numériques limitant la propagation des erreurs de transmission, consistant pour le codage à quantifier l'erreur de prédiction entre la valeur numérique à coder et une valeur de prédiction de cette valeur à coder calculée à partir de valeurs précédentes reconstruites, à allouer un mot codé pris parmi $2^k$

mots de code à cette erreur de prédiction quantifiée et à le transmettre, et pour le décodage, à déduire du code reçu l'erreur de prédiction correspondante, puis à déduire la valeur reconstruite correspondante pour une prédiction calculée de la même façon que pour le codage à partir de valeurs précédentes reconstruites, est principalement caractérisé en ce qu'il consiste en outre à quantifier la prédiction elle-même lors du codage et du décodage, l'allocation de code à l'erreur de prédiction quantifiée étant effectuée lors du codage, en fonction de la prédiction quantifiée, chaque prédiction quantifiée étant associée à $2^k$ niveaux de quantification d'erreur de prédiction, répartis de la même manière entre les niveaux extrêmes et codés par les $2^k$ mots de code, ces mots de code étant alloués aux niveaux de quantification successifs toujours dans le même ordre entre les niveaux extrêmes associés aux différentes prédictions quantifiées, et le calcul de l'erreur de prédiction étant effectué lors du décodage en fonction de la prédiction quantifiée, une erreur de transmission qui entraîne lors du décodage une erreur sur la prédiction quantifiée correspondante pour la valeur suivante étant compensée par le calcul de l'erreur de prédiction qui tient compte de cette prédiction quantifiée.

L'invention a également pour objet un système de codage-décodage destiné à la mise en oeuvre de ce procédé.

L'invention sera mieux comprise et d'autres caractéristiques apparaîtront à l'aide de la description qui suit en référence aux figures annexées.

— La figure 1 représente un système connu de codage-décodage différentiel.
— La figure 2 représente un premier mode de réalisation du système de codage-décodage suivant l'invention, avec caractéristique de quantification globale unique;
— La figure 3 est un diagramme représentatif d'un exemple d'allocation de code dans le procédé suivant l'invention avec une caractéristique de quantification globale unique;
— La figure 4 représente un second mode de réalisation du système de codage-décodage, avec caractéristique unique, utilisant pour le codage la prédiction quantifiée;
— La figure 5 est un diagramme représentatif d'un second exemple d'allocation de code avec une caractéristique de quantification multiple;
— La figure 6 représente un troisième mode de réalisation du système, avec une caractéristique multiple;
— La figure 7 représente un quatrième mode de réalisation du système, avec caractéristique de quantification multiple, et utilisant pour le codage la prédiction quantifiée.

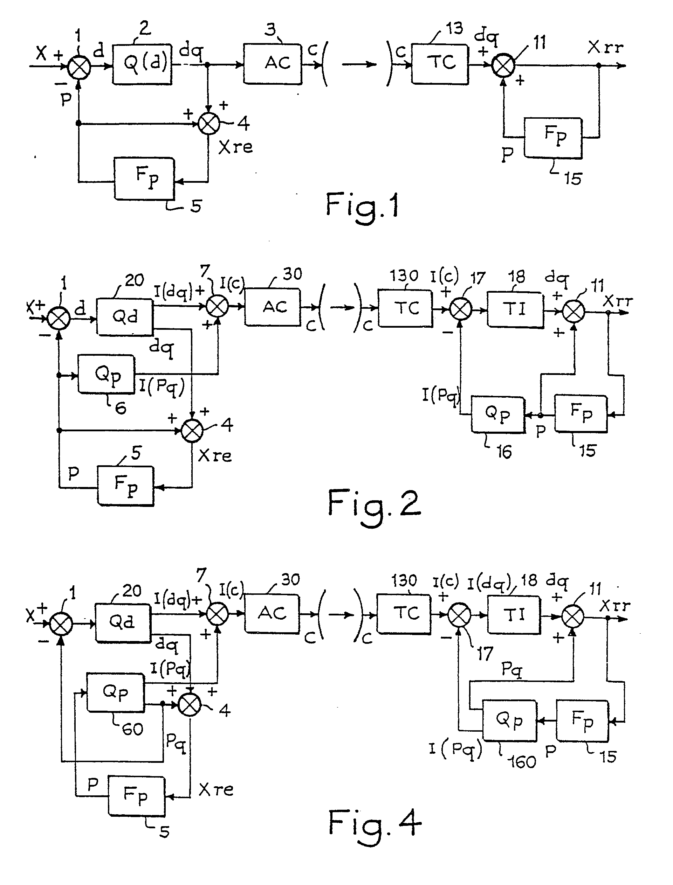

La figure 1 représente le schéma synoptique d'un système de codage-décodage MICD classique. Cette figure va permettre d'introduire les notations qui seront ensuite reprises dans la description qui suivra de l'invention.

Ce système comporte une partie codeur qui reçoit la grandeur numérique X à coder. Cette grandeur peut prendre par exemple $2^8$ valeurs différentes transmises sous forme de mots de 8 bits. Cette grandeur X est diminuée de la prédiction P dans un circuit de différence 1 pour fournir une différence d (ou erreur de prédiction). Cette différence est appliquée à un quantificateur 2 qui fournit, suivant la différence à son entrée une différence quantifiée dq ayant l'un ou l'autre de n niveaux quantifiés, $E_i$, i=0, à n−1, fonction de la caractéristique de quantification Q(d). C'est cette opération qui réalise la réduction de débit puisqu'à toutes les valeurs de différence d=X−P comprises entre deux seuils $S_i$ et $S_{i+1}$, une seule valeur, ou niveau de reconstruction $E_i$, est associée. Quand $S_i<d\leq S_{i+1}$, le niveau de reconstruction est $E_i$. La sortie de ce quantificateur 2 est reliée à l'entrée d'un allocateur de code 3, (AC), qui fournit un code variable C: à chaque niveau quantifié $E_i$, un code déterminé $C_i$ est transmis sur la ligne de transmission. Si le code a une longueur fixe, un code de k bits peut être associé à une caractéristique de quantification à $n=2^k$ niveaux.

Par ailleurs la prédiction P est obtenue dans le codeur à partir d'une valeur reconstruite $X_{re}$ obtenue à partir de la prédiction P, et du niveau quantifié dq pour l'échantillon précédent appliqués aux entrées d'un sommateur 4. La sortie de ce sommateur est reliée à l'entrée d'un prédicteur 5 dont la fonction de prédiction est $F_p$. La fonction de prédiction la plus simple est celle qui donne à la prédiction P pour un échantillon donné, la valeur reconstruite $X_{re}$ correspondant à l'échantillon précédent.

La partie décodeur comporte, relié à l'entrée réception, un circuit TC, 13, transformateur de code en niveaux de reconstruction. Le niveau quantifié reconstruit dq est appliqué à une entrée d'un sommateur 11 qui reçoit sur son autre entrée la prédiction P et fournit la valeur reconstruite $X_{rr}$. Cette prédiction est élaborée à partir de la valeur reconstruite $X_{rr}$ appliquée à l'entrée d'un prédicteur 15 de même fonction de prédiction $F_p$ que le prédicteur 5 du codeur.

Dans un tel système, la prédiction P est donc élaborée à partir des valeurs reconstruites, $X_{re}$ dans le codeur et $X_{rr}$ dans le décodeur. S'il y a eu erreur de transmission, le niveau quantifié reconstruit et donc la valeur de la variable reconstruite ainsi que la prédiction sont entachés d'erreurs et l'erreur se propage aux valeurs suivantes.

Comme indiqué ci-dessus, il est connu d'améliorer les performances d'un tel système en réalisant une quantification fonction de la prédiction, mais cette quantification ne réduit pas le taux d'erreur.

Un mot de code donné, soit $C_i$, est associé à des zones d'erreurs de prédiction différentes, et donc à des niveaux de reconstruction différents suivant les zones de prédiction, la gamme de variation de la prédiction étant découpée en zones dans lesquelles la dynamique de l'erreur de prédiction est seulement la moitié de la dynamique totale de cette erreur. Ce qui permet d'utiliser à peu près moitié moins de codes que si un code donné était toujours affecté au même niveau de reconstruction. Avec un code constitué de mots de $k$ bits (exemple $k=3$) il est possible de définir une caractéristique de quantification unique à $2^{k+1}-1$ niveaux (soit 15 niveaux) couvrant toute la dynamique de $X-P$, et de transmettre des codes différents en fonction des zones de prédiction, $2^k$ codes différents seulement étant nécessaires dans chaque zone de prédiction.

Avec un code constitué de mots de $k$ bits, il est également possible de définir autant de caractéristiques de quantification de $2^k$ niveaux que de zones de prédiction, le nombre de zones de prédiction étant alors indépendant du nombre de bits du code.

Le système suivant l'invention définit également des zones de prédiction, mais met en oeuvre une allocation de code aux niveaux de reconstruction particulière, elle aussi fonction de la prédiction, qui permet de limiter la propagation des erreurs de transmission.

Pour cela, les codes sont alloués toujours dans le même ordre aux zones de quantification successives entre le niveau de reconstruction minimal et le niveau de reconstruction maximal pour toutes les zones de prédiction, et le système réduit la propagation des erreurs.

La figure 2 représente un premier mode de réalisation du système suivant l'invention dans lequel l'allocation de code est associée à une caractéristique de quantification globale unique qui ne dépend pas de la valeur de la prédiction; seule l'allocation de code est fonction de la prédiction.

La partie codeur de ce système comporte, comme celui décrit en référence à la figure 1, une entrée de données $X$ à coder reliée à la première entrée d'un circuit de différence 1 qui reçoit sur sa deuxième entrée la prédiction $P$ fournie par un prédicteur 5. Mais il comporte un quantificateur d'erreur de prédiction 20 ayant une première sortie qui fournit la différence quantifiée $dq$ comme précédemment, et une seconde sortie qui fournit l'indice $I(dq)$ de la zone de quantification correspondante dans la caractéristique de quantification divisée en $2^{k+1}-1$ zones par $2^{k+1}$ seuils. La première sortie de ce quantificateur est reliée à la première entrée du sommateur 4 qui reçoit sur la seconde entrée la prédiction $P$ et qui fournit comme précédemment la valeur reconstruite $X_{re}$ à l'entrée du prédicteur 5. Le codeur comporte en outre un quantificateur de prédiction 6 dont l'entrée est reliée à la sortie du prédicteur 5 et qui fournit, en fonction de la caractéristique de quantification de la prédiction $Q_p$, l'indice $I(P_q)$ de la zone de la prédiction quantifiée. La sortie de ce quantificateur est reliée à l'entrée d'un sommateur 7 qui reçoit sur sa seconde entrée l'indice de la zone d'erreur de prédiction quantifiée. La sortie de ce sommateur est reliée à l'entrée d'un allocateur de code 30 qui fournit à partir de la somme des indices $I(dq)$ et $I(P_q)$ un code $C$ transmis en ligne.

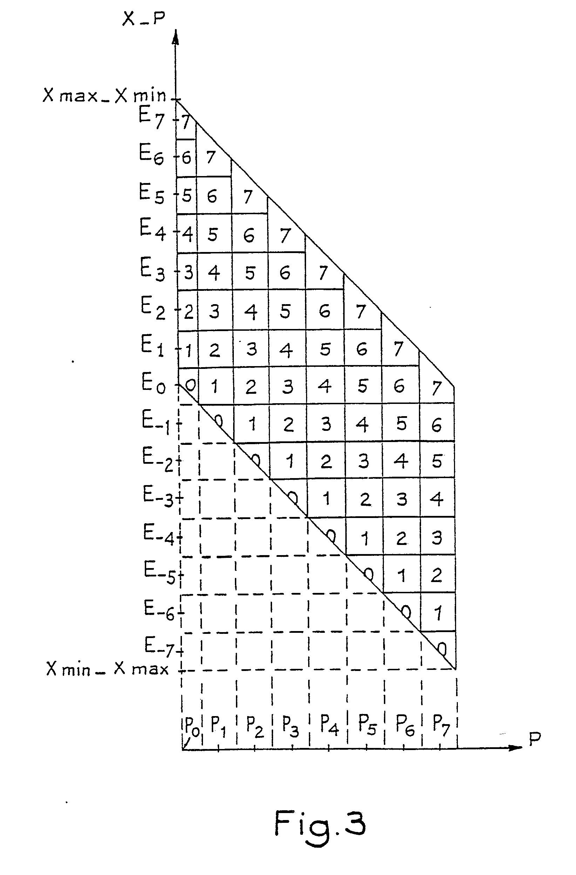

La figure 3 illustre cette allocation de code particulière pour un système de codage-décodage où $k=3$, avec une caractéristique de quantification globale unique. Le quantificateur d'erreur de prédiction 20 dont la caractéristique $Q(d)$ comporte $2^{k+1}$ seuils, équidistants sur la figure, définit $2^{k+1}-1$ zones quantifiées en $2^{k+1}-1$ niveaux:

$$E_i \; (E_{2k-1}, \; E_{-2k} \ldots E_o, \; \ldots, \; E_{2k}, \; E_{2k+1}),$$

soit $i$ appartenant à l'ensemble

$$A=[-(2k+1)\ldots(2k+1)]$$

et fournit à un instant donné les valeurs $dq=E_i$ et $I(dq)=i$.

De même le quantificateur de prédiction 6 dont la caractéristique de quantification $Q(P)$ comporte $2^k$ zones définit des prédictions quantifiées $P_j$, $j$ appartenant à l'ensemble $B=[0\ldots 2^K-1]$, équidistante et de même largeur que les zones d'erreurs de prédiction; $P_0$ est égale à 0 et la première zone étant égale à la moitié des suivantes.

Ce quantificateur fournit l'indice $I(Pq)=j$.

Le code alloué $C$, est lié à l'indice $m=i+j$, $m=(0, 1, 2, \ldots, 2^k-1)$, de façon que lorsqu'un indice $m$ donné est obtenu à la sortie du sommateur 7, le code transmis est $C_m$.

Ainsi, pour des zones de codage définies par

$$\ldots (E_{i-2}, \; P_{j+2}); \; (E_{i-1}, \; P_{j+1}), \; (E_i, \; P_j), \; (E_{i+1}, \; P_{j-1}) \ldots,$$

le même numéro de code est obtenu et le même code est émis.

Dans l'exemple d'allocation de codes de la figure 3 le codeur à $k=3$ éléments binaires donne $2^3=8$ mots de codes notés 0 à 7 sur cette figure. La caractéristique de quantification de l'erreur de prédiction $X-P$, comporte donc $2^{3+1}-1$, soit 15 zones qui ont été choisies sur la figure égales et donc 15 niveaux $E_{-7}, E_{-6}, \ldots E_0, E_1 \ldots E_7$ qui ont été choisis équidistants. L'égalité des zones et l'équidistance des niveaux de reconstruction ne sont pas nécessaires dans ce système. La gamme de prédiction est divisée en $2^3=8$ zones de prédiction correspondant à des prédictions quantifiées $P_0 \ldots P_7$ équidistantes. Ainsi les codes alloués aux différentes zones de codage sont obtenus par addition des indices $i$ des niveaux quantifiés et $j$ des prédictions quantifiées correspondant à ces zones de codage.

La partie décodeur du système de codage-décodage de la figure 2 comporte un transformateur de code TC, 130, qui à partir du code reçu fournit l'indice $I(C)$ correspondant et dont la sortie est reliée à l'entrée d'un circuit de différence 17. Ce circuit de différence reçoit sur sa seconde entrée l'indice $I(P_q)$ de la prédiction quantifiée d'un quantificateur de prédiction 16 de même fonction de prédiction $Q_p$ que le quantificateur 6 du codeur. La sortie du circuit de différence 17 est reliée à l'entrée d'un circuit 18 de transformation d'indice TI, de l'indice I(dq) en erreur de prédiction, dq. La sortie de ce circuit est reliée à une entrée du sommateur de sortie 11 dont la sortie fournit la valeur reconstruite $X_{rr}$. Cette sortie est reliée comme précédemment (figure 1) à l'entrée d'un prédicteur 15 ayant la même fonction de prédiction $F_p$ que le prédicteur 5 du codeur. La sortie de ce prédicteur est reliée à la seconde entrée du sommateur de sortie 11 et à l'entrée du quantificateur de prédiction 16.

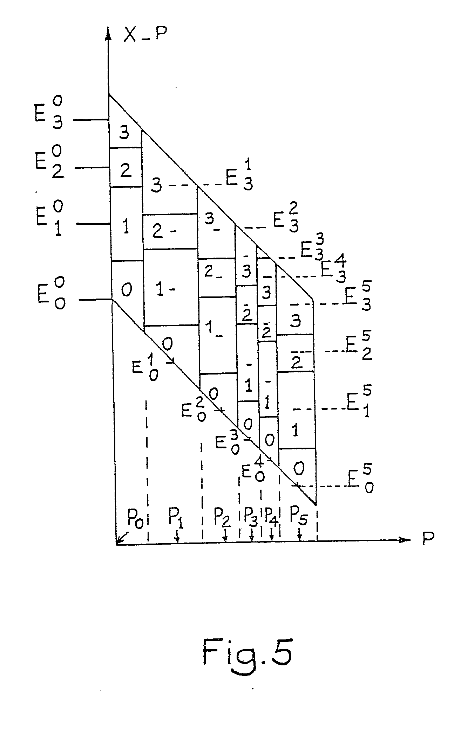

Le système de codage-décodage représenté sur la figure 4 est semblable à celui représenté sur la figure 2 si ce n'est qu'au lieu d'utiliser dans la boucle de codage différentiel la prédiction P élaborée par le prédicteur 5, la boucle de codage différentiel utilise la prédiction quantifiée $P_q$.

Pour cela, le prédicteur 6 est remplacé par le prédicteur 60 qui fournit en plus de l'indice de la zone de prédiction I($P_q$), la prédiction quantifiée elle-même, $P_q$. Cette prédiction quantifiée est appliquée, à la place de la prédiction P, d'une part à la seconde entrée du circuit de différence 1, et d'autre part à la seconde entrée du sommateur 4 dont la sortie fournit la valeur reconstruite $X_{re}$. Les autres éléments du codeur sont semblables et connectés de la même manière que ceux de la figure 2.

De la même manière dans la partie décodeur du système de codage-décodage de la figure 4, les éléments sont semblables et connectés de la même façon que ceux de la figure 2 si ce n'est que la prédiction quantifiée est utilisée à la place de la prédiction elle-même pour le calcul de la valeur reconstruite. Pour cela, un quantificateur de prédiction 160 comporte, comme le quantificateur de prédiction 60 du codeur, une seconde sortie fournissant la prédiction quantifiée $P_q$, cette sortie étant reliée à la seconde entrée du sommateur de sortie 11 qui fournit la valeur reconstruite $X_{rr}$.

Un tel système, dans sa première ou sa deuxième version, permet de réduire notablement l'effet des erreurs de transmission.

En effet, à un instant $t_1$, on suppose qu'il y a une erreur de transmission. Cette erreur de transmission se traduit à la sortie du décodeur par une variable reconstruite erronée par rapport à la valeur codée dans le codeur. Cette erreur existe toujours. Mais de plus, dans le décodeur cette erreur de transmission induit une erreur dans le calcul de la prédiction P. A l'instant suivant, $t_2$, les valeurs de prédiction calculées dans l'émetteur et dans le récepteur sont donc différentes: soit P dans l'émetteur et P' dans le récepteur. La valeur suivante transmise est élaborée dans l'émetteur à partir de la valeur numérique X à l'entrée et de la prédiction P. Si l'on suppose que cette valeur transmise est bien reçue au récepteur, la valeur reconstruite dans le récepteur sera calculée à partir d'une valeur correcte reçue et d'une prédiction P' erronée. Soit $P_j$ et $P'_{j'}$ les prédictions quantifiées fournies par les sorties des quantificateurs de prédiction 60 et 160 respectivement dans le codeur et dans le décodeur. Le code $C_m$ ayant été bien transmis, le niveau de reconstruction dans le codeur est $E_i$ avec $i=m-j$. Dans le décodeur, le niveau reconstruit est $E'_{i'}$ avec $i'=m-j'$. Les valeurs reconstruites sont respectivement dans le codeur $X_{re}=P+E_i$ dans le cas où la prédiction est utilisée dans la boucle de codage différentiel et $X_{re}=E_i+P_j$ lorsque la prédiction quantifiée est utilisée dans la boucle de codage différentiel.

Dans le décodeur la valeur reconstruite $X_{rr}=P'+E'_{i'}$ ou $X_{rr}=E'_{i'}+P'_{j'}$, suivant que la prédiction ou la prédiction quantifiée sont utilisées dans la boucle de codage différentiel.

La différence entre les valeurs reconstruites est:

$$X_{re}-X_{rr}=P-P'+E_{m-j}-E_{m-j'}$$

ou

$$P_j-P'_{j'}+E_{m-j}-E_{m-j'}.$$

$P-P'=(P_j+e)-(P'_{j'}+e')$, e et e' étant les erreurs sur la prédiction dues à la quantification, ou bruit de quantification

$P_j-P'_{j'}$ et $E_{m-j}-E_{m-j'}$ sont généralement du même ordre de grandeur en valeur absolue, ces deux sommes étant par ailleurs de signes opposés. La différence tend donc à s'annuler. Alors que, dans le système classique de la figure 1 la différence des valeurs reconstruites $X_{re}-X_{rr}$ lors d'une erreur de transmission est égale à $P-P'$.

Si les niveaux d'erreurs de prédiction quantifiés et les prédictions quantifiées sont tels que:

$$\text{et} \quad \begin{cases} E_i=ai+b \text{ pour } i \text{ appartenant à l'ensemble A} \\ P_j=aj+c \text{ pour } j \text{ appartenant à l'ensemble B} \end{cases}$$

ce qui est le cas dans l'exemple représenté sur la figure 3, alors $X_{re}-X_{rr}=e-e'$ lorsque la prédiction est utilisée dans la boucle de codage différentiel, l'erreur dans la reconstruction étant au maximum égale à la longueur d'un intervalle de quantification et, $X_{re}-X_{rr}=0$, lorsque la prédiction quantifiée est utilisée dans la boucle de codage différentiel.

Par exemple, en référence aux diagrammes de la figure 3,

— à un instant $t_1$ la prédiction $P_j=P_2$ à l'émetteur et au récepteur. Une valeur X dans l'émetteur donne une différence $d=X-P_2$ quantifiée en un niveau de reconstruction $E_1$. Ce niveau $E_1$ avec la prédiction $P_2$ correspond à un code émis $C_m$ avec $m=3$. La prédiction pour la valeur suivante est calculée à partir de la prédiction précédente $P_2$ et du niveau de reconstruction précédent $E_1$. Cette prédiction est par exemple $P_j$ avec $j=3$, si la prédiction est prise égale à la valeur reconstruite précédente. Si l'on suppose une erreur de transmission à cet instant $t_1$, le code $C_{m'}$ avec $m'=5$, est par exemple reçu. Ce code $C_5$ donne avec la prédiction $P_2$ un niveau de reconstruction $E_i$ avec $i=m'-j=3$, c'est-à-dire un niveau de reconstruction $E_3$. La valeur de prédiction calculée pour l'échantillon suivant est donc, dans le récepteur, $E_3+P_2$, soit $P'_{j'}$ avec $j'=5$.

— A l'instant $t_2$ les prédictions sont donc à l'émetteur $P_j$ avec $j=3$, et au récepteur $P'_{j'}$ avec $j'=5$. Un échantillon suivant X donne avec la prédiction $P_j$ à l'émetteur, une différence d quantifiée par exemple dans l'intervalle correspondant au niveau de reconstruction $E_{-1}$. Ce niveau conduit avec la prédiction $P_3$ à un code émis $C_m$, $m=3-1=2$.

La valeur reconstruite $X_{re}=P_3+E_{-1}$ soit $E_2$. Si l'on suppose qu'il n'y a pas d'erreur de transmission à cet instant $t_2$, le code $C_2$ est reçu. La prédiction est à cet instant $P_5$. Le niveau de reconstruction est donc $E_{i'}$ avec

$$i'=m-j'=2-5=-3.$$

La valeur reconstruite $X_{rr}$ est donc égale à: $P_5+E_{-3}=E_2$. On constate bien que, lorsque la valeur de la prédiction quantifiée est utilisée dans la boucle de codage différentiel, l'erreur est complètement annulée pour l'échantillon suivant.

Au lieu de choisir une caractéristique de quantification globale unique utilisée pour toutes les zones de quantification de la prédiction, il est possible d'utiliser une caractéristique multiple c'est-à-dire une caractéristique de quantification variable d'une zone de prédiction à la suivante en ce qui concerne les seuils et les niveaux de reconstruction, mais dont la forme est identique pour tous les intervalles de prédiction. Ainsi, si l'on dispose d'un code de k bits, donc de $2^k$ mots de code, l'échelle de quantification de l'erreur de prédiction comporte $2^k$ niveaux de reconstruction, cette échelle est reprise identique à elle-même pour toutes les zones de prédiction simplement en décalant les niveaux minimal et maximal qui sont fonction de la zone de prédiction considérée. La quantification de la prédiction quant à elle peut être choisie quelconque aussi bien quant à la disposition des intervalles de quantification que quant à leur nombre.

Ainsi, l'exemple représenté de la figure 5, correspond à un code à deux éléments binaires, soit $k=2$, c'est-à-dire 4 mots de code repérés par leurs indices m de 0 à 3 sur cette figure. A titre d'exemple également, six zones de prédiction $P_j$, $j=0$ à 5, ont été représentées. La quantification de la prédiction est prise quelconque. Avec une prédiction $P_j$ fixée, les quatre niveaux de quantification de l'erreur de prédiction peuvent être choisis indépendamment. Par contre une fois déterminée, cette caractéristique partielle est reprise identique à elle-même pour tous les intervalles de prédiction de même que l'allocation de code correspondante. Soit $E_i^j$, l'erreur de prédiction quantifiée dans la zone de quantification de l'erreur de prédiction de rang i et la zone de prédiction de rang j.

A titre d'exemple sur la figure 5 ont été notés les niveaux $E_0^j$, $E_3^j$, $E_i^0$ et $E_i^5$ pour $i=0$ à 3 et $j=0$ à 5.

Comme indiqué ci-dessus, les niveaux de reconstruction, ou erreurs de prédiction quantifiées, peuvent être choisis quelconques, mais leur échelle doit être telle que $E_i^j$ soit supérieure à $E_i^{j+1}$. Avec de telles conditions, comme dans le cas précédent, une erreur de transmission ne se propage pas car la différence $X_{re}-X_{rr}$ tend à s'annuler par la suite des opérations de codage puis de décodage.

De plus, si les niveaux de reconstruction de l'erreur de prédiction quantifiée sont, en fonction de la prédiction quantifiée tels que:

$E_i^j=E_i^0-P_j$ relation (I), l'erreur est complètement annulée pour l'échantillon suivant ou égale, au maximum, à la largeur d'un intervalle de quantification suivant que la prédiction quantifiée ou la prédiction simple sont utilisées dans la boucle de codage différentiel.

En effet, lorsqu'une erreur s'est produite à un instant $t_1$, les prédictions quantifiées $P_j$ et $P'_{j'}$ sont différentes. Pour le calcul de la valeur suivante, une différence d est quantifiée dans l'émetteur par un niveau $E_i^j$ et donne lieu à la transmission du code d'indice i qui est alors bien transmis.

Dans, le récepteur, la différence quantifiée est alors $E_i^{j'}$, avec la prédiction $P_{j'}$. Les valeurs reconstruites $X_{re}$ dans l'émetteur et $X_{rr}$ dans le récepteur sont:

$$X_{re}=P_j+E_i^j \quad \text{et} \quad X_{rr}=P_{j'}+E_i^{j'}$$

qui sont toutes deux, du fait de la construction de la caractéristique (relation I ci-dessus) égales à $E_i$.

Si la prédiction simple est utilisée dans la boucle, $X_{re}-X_{rr}=e-e'$.

Par exemple, en référence au diagramme de la figure 5:

— à un instant $t_1$, la prédiction $P_j=P_2$ à l'émetteur et au récepteur. Une valeur à coder X donne dans l'émetteur une différence $d=X-P_2$ quantifiée en un niveau $E_3^2$, par exemple, qui donne lieu à la transmission du code d'indice 3. La prédiction pour la valeur suivante est calculée à partir de $P_2$ et de $E_3^2$. Cette prédiction est prise égale à la valeur reconstruite soit $X_{re}=P_2+E_3^2=E_3^0$, soit une prédiction $P_3$.

Le code 1 est par exemple reçu du fait d'une erreur de transmission. Avec la prédiction $P_2$, le niveau quantifié reconstruit est $E_1^2$ et la valeur reconstruite est $X_{rr}=E_1^2+P_2=E_1$, soit une prédiction $P_1$.

— à l'instant suivant $t_2$, la valeur X donne avec la prédiction $P_3$ à l'émetteur un niveau quantifié en $E_1^3$ par exemple, soit un code d'indice 1 transmis, qui est bien reçu. La valeur reconstruite est à l'émetteur $X_{re}=E_1^3+P_3=E_1^0$.

La valeur reconstruite au récepteur est, à partir de la prédiction $P_1$, c'est-à-dire du niveau reconstruit $E_1^1$, $X_{rr}=E_1^1+P_1=E_1^0$. Les deux valeurs reconstruites sont bien égales comme les prédictions pour l'instant suivant.

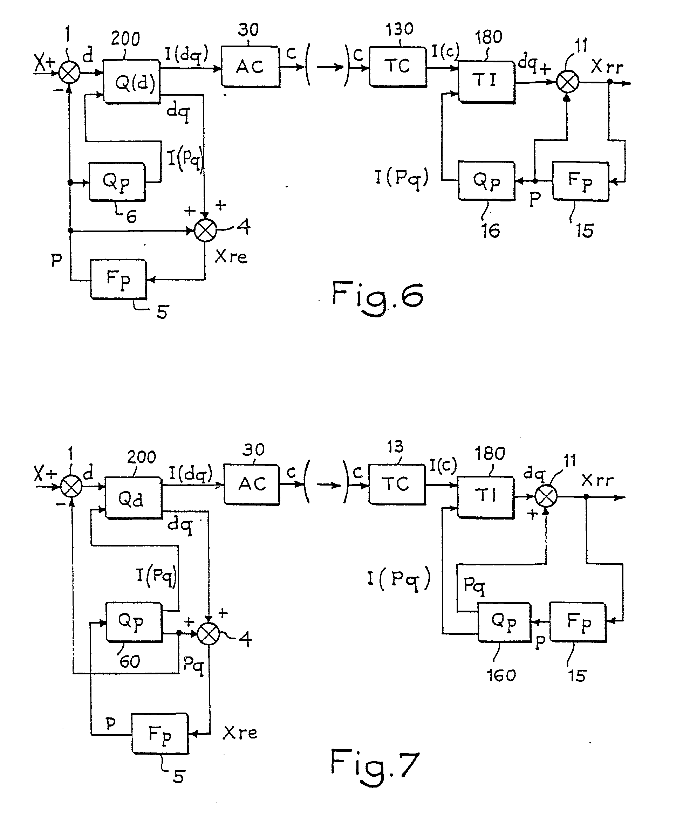

Un système de codage-décodage ayant une telle caractéristique multiple, dans lequel la prédiction simple est utilisée dans la boucle de codage différentiel est représenté sur la figure 6. Sur cette figure, les mêmes éléments que sur les figures précédentes ont été désignés par les mêmes repères.

La grandeur numérique X à coder est appliquée à l'entrée "+" d'un circuit de différence 1 dont l'entrée "−" reçoit la prédiction P d'un prédicteur 5 ayant une fonction de prédiction $F_p$. La différence X−P=d est appliquée à l'entrée d'un quantificateur d'erreur 200 dont la fonction de quantification Q(d) varie en fonction de l'indice de la prédiction quantifiée. Pour cela, ce quantificateur 200 comporte une seconde entrée recevant l'indice $I(P_q)$ de la prédiction quantifiée d'un quantificateur de prédiction 6 recevant sur son entrée la prédiction P. Ce quantificateur d'erreur de prédiction, 200, fournit sur une première sortie l'erreur quantifiée dq, et sur une seconde sortie l'indice de cette erreur quantifiée dans l'échelle d'erreur de prédiction. La première sortie est reliée à l'entrée d'un additionneur 4 dont la seconde entrée reçoit la prédiction P. La sortie de cet additionneur fournit la grandeur reconstruite $X_{re}$ appliquée à l'entrée du prédicteur 5. La seconde sortie du quantificateur 200 est reliée à l'entrée d'un allocateur de code 30 dont la sortie fournit le code C parmi les valeurs $C_m$ de m=0 à $2^k$. Dans la partie décodeur, le dispositif de codage-décodage comporte un transformateur de code 13 qui à partir du code C reçu fournit l'indice de ce code I(C)=m. Cette valeur est appliquée à la première entrée d'un transformateur d'indice en erreur de prédiction, 180, dont la seconde entrée · reçoi l'indice de la prédiction quantifiée délivré par la sortie d'un quantificateur de prédiction 16. La sortie du transformateur d'indice 180 délivre l'erreur quantifiée dq appliquée à la première entrée d'un additionneur de sortie 11. La sortie de cet additionneur fournit la grandeur reconstruite $X_{rr}$. Cette grandeur reconstruite est appliquée à l'entrée d'un prédicteur 15, analogue au prédicteur 5 du codeur, dont la sortie délivrant la valeur P de la prédiction est reliée d'une part à la seconde entrée de l'additionneur de sortie 11 et d'autre part à l'entrée du quantificateur de prédiction 16.

Comme il ressort de la description ci-dessus, ce système de codage-décodage est tout-à-fait semblable à celui décrit en référence à la figure 2 si ce n'est que le quantificateur d'erreur de prédiction 200 détermine les niveaux reconstruits et les indices correspondant en fonction de la prédiction P et plus particulièrement de l'indice de la prédiction quantifiée correspondante. A la réception, de la même manière, le transformateur d'indice 180 tient compte d'une part de l'indice du code reçu et d'autre part de l'indice de la prédiction quantifiée.

La figure 7 représente un système de codage-décodage analogue à celui de la figure 4 en ce qui concerne la boucle de codage différentiel qui utilise la prédiction quantifiée, et analogue à celui de la figure 6 en ce qui concerne la caractéristique de quantification de l'erreur de prédiction qui est multiple et fonction de la prédiction.

Ce système comporte donc le circuit de différence d'entrée 1 qui reçoit d'une part la valeur X à coder et d'autre par la prédiction quantifiée $P_q$. La sortie de ce circuit de différence est reliée à une première entrée du circuit de quantification d'erreur de prédiction 200 dont la seconde entrée reçoit l'indice $I(P_q)$ de la prédiction quantifiée de la première sortie d'un quantificateur de prédiction 60. Le quantificateur d'erreur de prédiction 200 a deux sorties fournissant respectivement, à partir de l'erreur d, l'erreur de prédiction quantifiée dq et l'indice de cette erreur quantifiée en fonction de l'indice de la prédiction correspondante. La première sortie de ce quantificateur est reliée à la première entrée d'un sommateur 4.

Le quantificateur de prédiction 60 fournit sur sa seconde sortie la prédiction quantifiée $P_q$ appliquée d'une part à la seconde entrée du sommateur 4 et d'autre part, comme indiqué ci-dessus à la seconde entrée du circuit de différence. Comme précédemment, la sortie de l'additionneur 4 qui fournit la grandeur reconstruite $X_{re}$ est reliée à l'entrée d'un prédicteur 5 dont la sortie, qui fournit la prédiction P, est reliée à l'entrée du quantificateur de prédiction 60. La seconde sortie du quantificateur d'erreur de prédiction, 200, qui fournit l'indice de la différence quantifiée est reliée à l'entrée d'un allocateur de code 30 qui fournit sur sa sortie le code à émettre.

Dans la partie décodage de ce système, le code reçu C est appliqué à l'entrée d'un transformateur de code 13 dont la sortie fournit l'indice I(C) du code reçu. Cet indice est appliqué à la première entrée du transformateur d'indice 180 qui reçoit sur sa seconde entrée l'indice de la prédiction quantifiée $I(P_q)$, fourni par la première sortie d'un quantificateur de prédiction 160. La seconde sortie du quantificateur de prédiction 160 est appliquée comme précédemment à la seconde entrée d'un additionneur 11 qui reçoit sur sa première entrée l'erreur quantifiée dq fournie par la sortie du transformateur d'indice 180. Cet additionneur de sortie fournit la grandeur reconstruite $X_{rr}$ appliquée à l'entrée d'un prédicteur 15 dont la sortie est reliée à l'entrée du quantificateur de prédiction 160.

**Revendications**

1. Procédé de codage-décodage différentiel de données numériques limitant la propagation des erreurs de transmission, consistant pour le codage à quantifier l'erreur de prédiction entre la valeur numérique à coder et une valeur de prédiction de cette valeur à coder calculée à partir de valeurs précédentes reconstruites, à allouer un mot codé pris parmi $2^k$ mots de code à cette erreur de prédiction quantifiée et à le transmettre, et pour le décodage, à déduire du code reçu l'erreur de prédiction correspondante, puis à déduire la valeur reconstruite correspondante pour une prédiction calculée de la même façon que pour le codage à partir de valeurs précédentes reconstruites, caractérisé en ce qu'il consiste en outre à quantifier la prédiction elle-même lors du codage et du décodage, l'allocation de code à l'erreur de prédiction quantifiée étant effectuée lors du codage, en fonction de la prédiction quantifiée, chaque prédiction quantifiée étant associée à $2^k$ niveaux de quantification d'erreur de prédiction, répartis de la même manière entre les niveaux extrêmes et codés par les $2^k$ mots de code, ces mots de code étant alloués aux niveaux de quantification successifs toujours dans le même ordre entre les niveaux extrêmes associés aux différentes prédictions quantifiées, et le calcul de l'erreur de prédiction étant effectué lors du décodage en fonction de la prédiction quantifiée, une erreur de transmission qui entraîne lors qu décodage une erreur sur la prédiction quantifiée correspondante pour la valeur suivante étant compensée par le calcul de l'erreur de prédiction qui tient compte de cette prédiction quantifiée.

2. Procédé selon la revendication 1, caractérisé en ce que la caractéristique de quantification de l'erreur de prédiction étant une caractéristique globale unique couvrant toutes les valeurs possibles de l'erreur de prédiction, la détermination de l'erreur de prédiction quantifiée est indépendante de la prédiction quantifiée, l'allocation de code étant seule fonction de cette prédiction quantifiée.

3. Procédé selon la revendication 1, caractérisé en ce que, une caractéristique de quantification partielle à $2^k$ niveaux étant déterminée pour chaque prédiction quantifiée, la détermination de l'erreur de prédiction quantifiée est effectuée à partir de la prédiction quantifiée et de l'erreur de prédiction, l'allocation de code étant alors effectuée à partir d'une erreur de prédiction, quantifiée variable avec la prédiction à erreur de prédiction constante.

4. Système de codage-décodage différentiel pour la mise en oeuvre du procédé selon la revendication 1, comportant dans l'émetteur un circuit de différence (1) recevant sur une première entrée la valeur X à coder et sur une seconde entrée une valeur de prédiction, dont la sortie est reliée à l'entrée d'un quantificateur d'erreur de prédiction (20) définissant des niveaux de quantification de l'erreur de prédiction prédéterminés, un sommateur (4) recevant sur une première entrée l'erreur quantifiée dq et sur une seconde entrée la valeur de prédiction, dont la sortie est reliée à l'entrée d'un prédicteur (5) délivrant une prédiction P, un quantificateur de prédiction (6) relié à la sortie du prédicteur (5) définissant des prédictions quantifiées, et, dans le récepteur, un circuit de transformation du code reçu en erreur de prédiction, un sommateur de sortie (11) dont une entrée est reliée à la sortie du circuit de transformation et dont une seconde entrée reçoit une valeur de prédiction, un prédicteur (15) semblable au prédicteur de l'émetteur, relié à la sortie du sommateur et un quantificateur de prédiction (16) semblable au quantificateur de prédiction de l'émetteur, relié à la sortie du prédicteur, caractérisé en ce qu'il comporte en outre dans l'émetteur un allocateur de code (30) couplé aux sorties des quantificateurs d'erreur de prédiction (20) et de prédiction (6) effectuant l'allocation du mot de code, pris parmi $2^k$ mots, au niveau de quantification de l'erreur de prédiction, en fonction de la prédiction quantifiée, et en ce que, dans le récepteur, le circuit de transformation de code a une entrée couplée à la sortie du quantificateur de prédiction (16).

5. Système selon la revendication 4, caractérisé en ce que les $2^k$ niveaux de quantification de l'erreur de prédiction, pour une prédiction quantifiée donnée, forment une partie d'une caractéristique de quantification globale unique à $2^{k+1}-1$ niveaux $E_i$, i appartenant à

$$[-(2k+1)\ldots(+2k+1)]$$

couvrant toutes les valeurs possibles de l'erreur de prédiction, le quantificateur d'erreur de prédiction (20) ayant une seule entrée reliée à la sortie du circuit de différence, les niveaux de quantification de l'erreur de prédiction $E_i$ et les niveaux de quantification de la prédiction $P_j$, j appartenant à $[0\ldots 2^k-1]$ étant tels que $E_i=ai+b$ et $P_j=aj+c$, où a, b et c sont des coefficients donnés (Fig. 2 à 4).

6. Système selon la revendication 4, caractérisé en ce que les $2^k$ niveaux de quantification de l'erreur de prédiction $E_i^j$ pour i appartenant à $[0\ldots 2^k-1]$, pour une prédiction quantifiée donnée $P_j$, forment une caractéristique de quantification partielle, reproduite dans les zones de prédiction quantifiées successives après décalage, par rapport à la caractéristique correspondant au premier intervalle de quantification $P_0$, de la valeur de prédiction quantifiée $P_j$ correspondante, le quantificateur d'erreur (200) ayant une entrée reliée à la sortie du circuit de différence et une entrée reliée à la sortie du quantificateur de prédiction (Fig. 5 à 7).

7. Système selon l'une quelconque des revendications 4 à 6, caractérisé en ce que dans l'émetteur la sortie du prédicteur (5) est reliée à la seconde entrée du circuit de différence (1) et à la seconde entrée du sommateur (4), et dans le récepteur la sortie du prédicteur (15) est reliée à la seconde entrée du sommateur de sortie (11), la valeur de prédiction utilisée pour le codage et le décodage différentiel étant la prédiction P fournie par la sortie du prédicteur correspondant.

8. Système selon l'une quelconque des revendications 4 à 6, caractérisé en ce que, dans l'émetteur, une sortie du quantificateur de prédiction (60) est reliée à la seconde entrée du circuit de différence (1) et à la seconde entrée du sommateur (4) et dans le récepteur une sortie du quantificateur de prédiction (160) est reliée à la seconde entrée du sommateur de sortie (11), la valeur de prédiction utilisée pour le codage différentiel étant la prédiction quantifiée, $P_q$ fournie par la sortie du quantificateur de prédiction correspondant.

## Patentansprüche

1. Differential-Kodier- und Dekodierverfahren für Digitaldaten, bei dem die Weiterleitung von Übertragungsfehlern begrenzt ist, wobei für die Kodierung der Vorhersagefehler zwischen einem zu kodierenden Wert und einem Vorhersagewert dieses zu kodierenden Werts, der ausgehend von den vorhergehenden wiedererstellten Werten berechnet wurde, quantifiziert wird, dann diesem quantifizierten Vorhersagefehler ein aus $2^k$ Kodewörtern genommenes Kodewort zugeordnet wird und schließlich dieses Kodewort übertragen wird, während für die Dekodierung der entsprechende Vorhersagefehler vom empfangenen Kode abgezogen wrid, dann der wiedererstellte entsprechende Wert für eine in gleicher Weise wie für die Kodierung ausgehend von den vorhergehenden wiedererstellten Werten berechnete Vorhersage abgezogen wird, dadurch gekennzeichnet, daß das Verfahren außerdem darin besteht, die Vorhersage selbst während der Kodierung und der Dekodierung zu quantifizieren, wobei die Kodezuordnung zum quantifizierten Vorhersagefehler während der Kodierung abhängig von der quantifizierten Vorhersage erfolgt und jede quantifizierte Vorhersage $2^k$ Quantifizierungspegeln des Vorhersagefehlers, in gleicher Weise zwischen den extremen Pegeln aufgeteilt und durch die $2^k$ Kodewörter kodiert, zugeordnet wird, wobei weiter diese Kodewörter den aufeinanderfolgenden Quantifizierungspegeln stets in derselben Reihenfolge zwischen den den verschiedenen quantifizierten Vorhersagen zugeordneten extremen Pegeln zugeteilt sind, während die Berechnung des Vorhersagefehlers bei der Dekodierung abhängig von der quantifizierten Vorhersage erfolgt, wobei ein Übertragungsfehler, der während der Dekodierung einen Fehler in der entsprechenden quantifizierten Vorhersage für den nachfolgenden Wert nach sich zieht, durch die Berechnung des Vorhersagefehlers, der diese quantifizierte Vorhersage berücksichtigt, kompensiert wird.

2. Verfahren nach Anspruch 1, dadurch gekennzeichnet, daß die Quantifizier - Charakteristik des Vorhersagefehlers eine einheitlich globale Charakteristik ist, die alle möglichen Werte des Vorhersagefehlers umfaßt, wobei die Bestimmung des quantifizierten Vorhersagefehlers unabhängig von der quantifizierten Vorhersage ist und die Zuteilung des Kodes die einzige Funktion dieser quantifizierten Vorhersage ist.

3. Verfahren nach Anspruch 1, dadurch gekennzeichnet, daß eine partielle Quantifikations - Charakteristik mit $2^k$ Pegeln für jede quantifizierte Vorhersage bestimmt wird und die Bestimmung des quantifizierten Vorhersagefehlers ausgehend von der quantifizierten Vorhersage und vom Vorhersagefehler erfolgt, worauf die Kodezuteilung ausgehend von einem quantifizierten Vorhersagefehler erfolgt, der mit der Vorhersage bei konstantem Vorhersagefehler variiert.

4. Differential - Kodier - Dekodiersystem zur Durchführung des Verfahrens nach Anspruch 1, mit einem Sender, der einen Differenzschaltkreis (1), der über einen ersten Eingang den zu kodierenden Wert X und auf einem zweiten Eingang einen Vorhersagewert zugeführt erhält und dessen Ausgang an den Eingang eines Vorhersagefehler - Quantifizierers (20) angeschlossen ist, der vorgegebenen Quantifizierpegel für den Vorhersagefehler definiert, einen Summierer (4), der über einen ersten Eingang den quantifizierten Fehler dq und über einen zweiten Eingang den Vorhersagewert zugeführt erhält und dessen Ausgang an den Eingang einer eine Vorhersage P liefernden Vorhersageschaltung (5) angeschlossen ist, und einen Vorhersage - Quantifizierer (6) aufweist, der an den Ausgang der quantifizierte Vorhersagen definierenden Vorhersageschaltung (5) angeschlossen ist, und mit einem Empfänger, der einen Transformationsschaltkreis für den den Vorhersagefehler betreffenden empfangenen Kode, einen Ausgangssummierer (11), von dem eine erster Eingang an den Ausgang des Transformationsschaltkreises angeschlossen ist und ein zweiter Eingang einen Vorhersagewert zugeführt erhält, eine Vorhersageschaltung (15), die der sendeseitigen Vorhersageschaltung ähnelt und an den Ausgang des Summierers angeschlossen ist, und einen Vorhersage - Quantifizierer (16) aufweist, der dem sendeseitigen Vorhersage - Quantifizierer ähnelt und der an den Ausgang der Vorhersageschaltung angeschlossen ist, dadurch gekennzeichnet, daß es außerdem auf der Senderseite einen Kodezuteiler (30) enthält, der an die Ausgänge der Fehlervorhersage-Quantifizierer (20) und der Vorhersage - Quantifizierer (6) gekoppelt ist und die Zuordnung des aus $2^k$ Wörtern ausgewählten Kodeworts bezüglich des Quantifizierungspegels für den Vorhersagefehler abhängig von der quantifizierten Vorhersage durchführt, und daß der empfängerseitige Kodetransformationsschaltkreis einen Eingang besitzt, der an den Ausgang des Vorhersagequantifizierers (16) angeschlossen ist.

5. System nach Anspruch 4, dadurch gekennzeichnet, daß die $2^k$ Quantifizierungspegel für den Vorhersagefehler im Rahmen einer gegebenen quantifizierten Vorhersage einen Teil einer globalen einheitlichen Quantifikations-charakteristik mit $2^{k+1}-1$ Pegeln $E_i$ bilden, wobei i zwischen $-(2k+1)$ und $(+2k+1)$ liegt und alle möglichen Werte des Vorhersagefehlers überdeckt, wobei weiter der Quantifizierer (20) für den Vorhersagefehler einen einzigen Eingang aufweist, der an den Ausgang des Differenzschaltkreises angeschlossen ist, und die Quantifikationspegel des Vorhersagefehlers $E_i$ und die Quantifikationspegel der Vorhersage $P_j$ so gewählt sind, daß gilt: $E_i=ai+b$ und $P_j=aj+c$, wobei j zwischen 0 und $2^k-1$ liegt und a, b und c gegebene Koeffizienten darstellen (Fig. 2 bis Fig. 4).

6. System nach Anspruch 4, dadurch gekennzeichnet, daß die $2^k$ Quantifizierungspegel des

Vorhersagefehlers $E_i^j$ für eine gegebene quantifizierte Vorhersage $P_j$ eine partielle Quantifikationscharakteristik bilden, die in den aufeinanderfolgenden quantifizierten Vorhersagezonen nach Verschiebung des entsprechenden quantifizierten Vorhersagewerts $P_j$ bezüglich der dem ersten Quantifikationsintervall $P_0$ entsprechenden Charakteristik reproduziert ist, wobie der Fehlerquantifizierer (200) einen Eingang, der an den Ausgang des Differenzschaltkreises angeschlossen ist, und einen Eingang besitzt, der an den Ausgang des Vorhersagequantifizierers angeschlossen ist (Fig. 5 bis 7) $(0 \leqslant i \leqslant 2^k - 1)$.

7. System nach einem beliebigen der Ansprüche 4 bis 6, dadurch gekennzeichnet, daß senderseitig der Ausgang der Vorhersageschaltung (5) an den zweiten Eingang des Differenzschaltkreises (1) und an den zweiten Eingang des Summierers (4) angeschlossen ist und empfängerseitig der Ausgang der Vorhersageschaltung (15) an den zweiten Eingang des Ausgangssummierers (11) angeschlossen ist, wobei der für die Differentialkodierung und -dekodierung verwendete Vorhersagewert die Vorhersage P ist, die vom Ausgang der entsprechenden Vorhersageschaltung geliefert wird.

8. System nach einem beliebigen der Ansprüche 4 bis 6, dadurch gekennzeichnet, daß senderseitig ein Ausgang des Vorhersagequantifizierers (60) an den zweiten Eingang des Differenzschaltkreises (1) und an den zweiten Eingang des Summierers (4) angeschlossen ist und empfängerseitig ein Ausgang des Vorhersagequantifizierers (160) an den zweiten Eingang des Ausgangssummierers (11) angeschlossen ist, wobei der für die Differentialkodierung verwendete Vorhersagewert die quantifizierte Vorhersage $P_q$ ist, die vom Ausgang des entsprechenden Vorhersagequantifizierers geliefert wird.

**Claims**

1. A differential digital data coding-decoding method reducing propagation of transmission errors, in which coding comprises quantizing the forecasting error between the digital quantity to be coded and a forecast value of this same quantity, calculated on the basis of reconstructed previous values, assigning a code word, selected from $2^k$ code words, to this quantized forecasting error, and transmitting it, and in which decoding comprises deducing from the code word received the corresponding forecast error, then deducing the corresponding reconstructed value for a forecast calculated in the same way as for coding from reconstructed previous values, characterized in that the method further comprises quantizing the actual forecast during coding and decoding, a code word being assigned to the quantized forecasting error during coding on the basis of the quantized forecast, each such quantized forecast being associated to $2^k$ forecasting error quantization levels spaced out in the same manner between the extreme levels and coded by the $2^k$ words, these code words being assigned to the successive quantization levels always in the same order between the extreme levels associated to the different quantized forecasts, and the forecasting error being calculated during decoding on the basis of the quantized forecast, a transmission error which during decoding causes an error in the corresponding quantized forecast for the following value being compensated for by calculation of the forecasting error, which takes this quantized forecast into account.

2. A method according to claim 1, characterized in that the forecast error quantization characteristic is a single overall characteristic covering all possible values of the forecast error, determination of the quantized forecast error therefore being independent of the quantized forecast, code allocation being only related to the said quantized forecast.

3. A process as defined in claim 1, characterized in that a partial quantization characteristic with $2^k$ levels is determined for each quantized forecast, and the quantized forecast error is determined on the basis of the quantized forecast and of the forecast error, code allocation therefore being based on a quantized forecast error which varies with the forecast at constant forecast error.

4. A differential coding-decoding system to implement the method defined in claim 1, the transmitter comprising a subtracter (1), the first input of which receives the quantity X for coding, the second input of which receives a forecast value, and the output of which is connected to the input of a forecast error quantizer (20) defining predetermined forecast error quantization levels, an adder (4), one input of which receives the quantized error dq, and the second input of which receives the forecast, and the output of which is connected to the input of a forecaster (5) delivering a forecast P, a forecast quantizer (6) connected to the forecaster (5) output, defining quantized forecasts, and the receiver comprising a converter circuit for the received forecast error code, an output adder (11), one input of which is connected to the converter circuit output, and a second input of which receives a forecast value, a forecaster (15) similar to the transmitter forecaster, connected to the adder output, and a forecast quantizer (16), similar to the transmitter forecast quantizer, connected to the forecaster output, characterized in that the system further comprises in the transmitter a code allocator (30) connected to the output of the forecast error quantizer (20) and the forecast quantizer (6), and assigning the code word from $2^k$ words to the forecast error quantization level on the basis of the quantized forecast, and that in the receiver, the code converter circuit is coupled by an input to the output of the forecast quantizer (16).

5. A system as defined in claim 4, characterized in that the $2^k$ forecast error quantization levels, for a given quantized forecast, form part of a single overall quantization characteristic with $2^{k-1} - 1$ levels $E_i$, where i belongs to the set $-(2k+1) \dots$

(+2k+1) covering all possible forecast error values, the forecast error quantizer (20) having a single input connected to the subtractor output, forecast error quantization levels $E_i$ and forecast quantization levels $P_j$, where j belongs to the set $0 \ldots 2^k-1$ being such that $E_i=ai+b$ and $P_j=aj+c$, where a, b and c are given coefficients (fig. 2 to 4).

6. A system as defined in claim 4, characterized in that the $2^k$ forecast error quantization levels $E_i^j$, where i belongs to the set $0 \ldots 2^k-1$, for a given quantized forecast $P_j$, form a partial quantization characteristic, reproduced in successive quantized forecast zones after staggering, in relation to the characteristic corresponding to the first quantization interval $P_0$, of the corresponding quantized forecast value $P_j$, one input of the error quantizer (200) being connected to the subtracter output, and another input thereof being connected to the forecast quantizer output (fig. 5 to 7).

7. A system as defined in any one or other of claims 4 to 6, characterized in that the forecaster (5) output in the transmitter is connected to the second subtracter (1) input and to the second adder (4) input, and the forecaster (15) output in the receiver is connected to the second output subtracter (11) input, the forecast value used for differential coding and decoding being the forecast P delivered by the corresponding forecaster output.

8. A system as defined in any one of claims 4 to 6, characterized in that an output of the forecast quantizer (60) in the transmitter is connected to the second subtracter (1) input and to the second adder (4) input, and an output of the forecast quantizer (160) in the receiver is connected to the second output adder (11) input, the forecast value used for differential coding being the quantized forecast $P_q$ delivered by the corresponding forecast quantizer output.

Fig.1

Fig.2

Fig.4

Fig.3

2

Fig.5

0 078 195

Fig.6

Fig.7

4